# EUROPÄISCHE PATENTANMELDUNG

(11) **EP 0 926 302 A2**
(43) Veröffentlichungstag der Anmeldung: **30.06.1999**
(21) Anmeldenummer: 98123617.7
(22) Anmeldetag: 10.12.1998
(51) Int. Cl.: E04B 1/76

(54) **Verbindungselement für Isoliermatten**

(30) Priorität: 23.12.1997 DE 29722726 U
(71) Anmelder: UPAT GMBH & CO, D-79312 Emmendingen (DE)
(72) Erfinder: Frischmann, Albert, 79341 Kenzingen (DE); Berg, Ralph, 79112 Freiburg (DE)

(57) **Zusammenfassung**

Verbindungselement zum Verbinden von Isoliermatten untereinander, das aus einem Dübel 1 mit Ausnehmungen 5, 6, die durch die beweglichen Klappen 3, 4 verschlossen sind, versehen ist.

Um ein gutes und kostengünstiges Verbindungselement für Isoliermatten zu erreichen, ist vorgesehen, in den Dübelschaft ein expansionsfähiges Mittel einzuspritzen.

## Beschreibung

Die Erfindung betrifft ein Verbindungselement gemäß der Gattung des Hauptanspruchs.

Zur Vermeidung von Wärmebrücken werden an den Wänden zweilagige Dämmatten angebracht. Die untere Dämmatte wird herkömmlich im Untergrund verankert und die zweite obere Matte wird nur noch in der Grunddämmung befestigt. Es ist erforderlich, daß bis zum Anbringen der Wetterschale die Befestigung neben dem geringeren Eigengewicht auch gegebenenfalls die auftretenden Windsogkräfte aufnimmt. Um diese Anforderung zu erfüllen, sind oft korkenziehartige Drähte mit Hilfe von elektrischen Schraubern und einem passenden Setzwerkzeug durch die vordere Malte hindurch in die Grunddämmung eingedreht. Die Haltewerte dieser Drähte sind relativ gering, so daß nicht immer die Windsogkräfte aufgenommen werden können. Ferner muß oft aus Korrisionsgründen ein Draht aus Edelstahl eingesetzt werden. Dies verteuert die Befestigung.

Der Erfindung liegt die Aufgabe zugrunde, ein kostengünstiges Verbindungselement für Isoliermatten zu schaffen, das unkompliziert gesetzt werden kann und eine gute Befestigung von Isoliermatten ermöglicht.

Die Lösung dieser Aufgabe wird durch die Merkmale der Schutzansprüche gelöst. Dadurch, daß der Dübel im vorderen Bereich mit Ausnehmungen versehen ist, die mit Hilfe von beweglichen Klappen verschlossen werden können, wird zuerst der Dübel beim Durchstechen der Matte geschlossen, da sich die Klappen an den Dübelschaft einlegen. Erst beim Auspressen des Expansionsmittels aus der Kartusche in den Dübel wird der expandierende Schaum durch die Ausnehmungen austreten und durch den erzeugenden Druck auf die Klappen diese in eine nahezu senkrechte Position bringen. Dies führt dazu, daß eine mechanische Verzahnung im Mattenuntergrund entsteht. Dabei quillt der Schaum zwischen die Faserbündel und nach dem Aushärten entsteht eine gute und wirtschaftliche Verankerung.

Die Befestigung erfolgt in der Weise, daß zuerst der Dübel über die vordere Matte hindurch gesteckt wird. Dabei sind die Öffnungen im Dübel verschlossen. Danach wird die Kartuschenkanüle in den Dübelteller eingesteckt und das Expansionsmittel ausgespritzt. Der stark expandierende Schaum tritt durch die Öffnungen aus und stellt die beweglichen Klappen nahezu senkrecht zur Dübellängsachse auf. Durch das Aufstellen der Klappen erfolgt eine mechanische Verzahnung im Mattenuntergrund. Außerdem wird der Dübelteller gegen die Oberfläche der vorderen Matte gezogen, da das expandierende Mittel gegen die offenen Klappen drückt. Gleichzeitig quillt der Schaum zwischen die einzelnen Faserbündel der Isoliermatte und bindet einen fadenförmigen Klumpen, der nach dem Aushärten des Schaumes eine sichere Verankerung schafft.

Die Erfindung wird nachfolgend anhand der Zeichnungen näher erläutert.

Es zeigen:
- Figur 1: den erfindungsgemäßen Dübel in Sicht
- Figur 2: zwei, mit Hilfe des in Figur 1 dargestellten Dübels, verbundene Matten

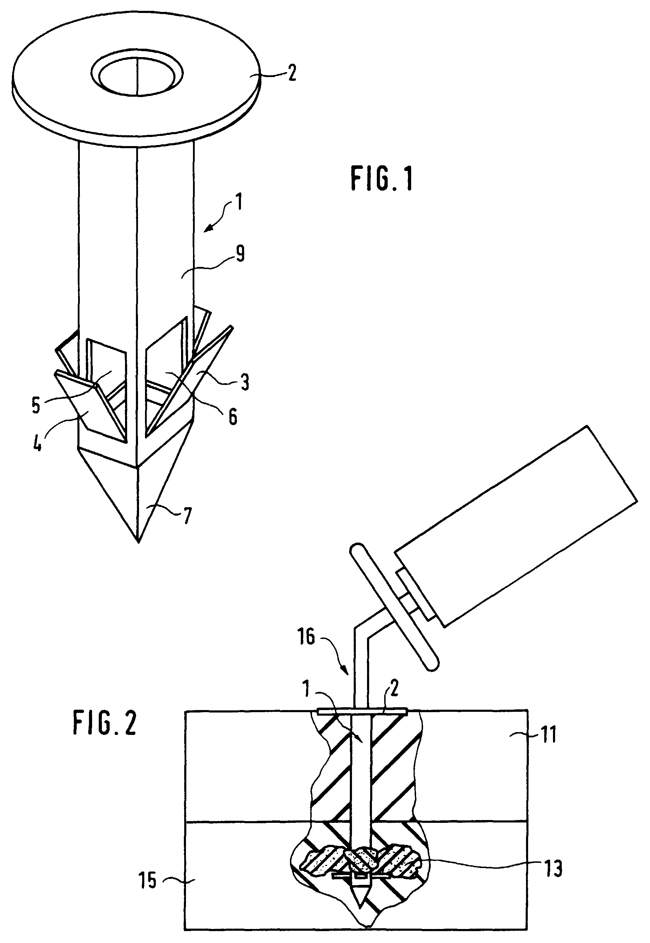

Der in Figur 1 dargestellte Dübel 1 besteht aus einem Schaft 9 und einem Teller 2. Im vorderen Bereich ist der Dübel mit einer Spitze 7 versehen. Im Schaft des Dübels sind Ausnehmungen 5, 6 angebracht, die mit Hilfe von beweglichen Klappen 3, 4 verschlossen werden. Nach dem Durchdrücken des Dübels 1 durch die Matte 11 wird die Kartuschenkanüle in den Dübel eingesteckt und das Expansionsmittel ausgespritzt. Der stark expandierende Schaum 13 tritt durch die Ausnehmungen 5, 6 im Dübelschaft 9 aus und stellt die Klappen senkrecht zur Dübelachse. Gleichzeitig quillt der Schaum 13 zwischen die einzelnen Faserbündel der hinteren Matte und härtet, wie die Figur 2 darstellt, aus.

## Patentansprüche

1. Verbindungselement zum Verbinden von Isoliermatten untereinander, das aus einem Dübel mit Schaft und Teller, sowie einem Expansionsmittelbesteht, **dadurch gekennzeichnet,** daß der Dübel (1) mit Ausnehmungen (5, 6), die durch die beweglichen Klappen (3, 4) verschlossen sind, versehen ist, und daß das expansionsfähige Mittel durch die Ausnehmungen (5, 6) in die Isoliermatten (15) gelangt.

2. Verbindungselement nach Anspruch 1, **dadurch gekennzeichnet**, daß die Ausnehmungen (5,6) über der Dübelspitze (7) angeordnet sind.

3. Verbindungselement nach Anspruch 1, **dadurch gekennzeichnet**, daß der Dübel aus Kunststoff hergestellt ist.

4. Verbindungselement nach Anspruch 1, **dadurch gekennzeichnet**, daß als expansionsfähiges Mittel Bauschäume eingesetzt sind.

5. Verbindungselement nach Anspruch 1, **dadurch gekennzeichnet**, daß die Länge des Schaftes so gewählt ist, daß die Klappen (3, 4) und Ausnehmungen (5, 6) hinter der Dübelspitze (7) mittig innerhalb der hinteren Matte liegen.
